# EUROPEAN PATENT APPLICATION

(11) **EP 4 510 406 A2**
(43) Date of publication of application: **19.02.2025**
(21) Application number: 24193944.6
(22) Date of filing: 09.08.2024
(51) Int. Cl.: H02J 3/14, C25B 1/04, H02J 3/32, H02J 9/06

(54) **METHOD AND SYSTEM FOR EMERGENCY BACKUP POWER**

(30) Priority: 15.08.2023 US 202363532735 P
(71) Applicant: Air Products and Chemicals, Inc., Allentown, PA 18106-5500 (US)
(72) Inventor: Endrejat, Frieder, Hampshire, GU51 3PL (GB); Wheeler, Samuel Jonathan, Cobham, KT11 2AR (GB); Hughes, David, London, SW20 8HW (GB)
(74) Representative: Beck Greener LLP

(57) **Abstract**

A controller, process, and apparatus can be configured to provide backup electrical power to various equipment used in hydrogen and/or ammonia production in response to a loss of power condition being detected. The loss of power can be due to unavailable power from renewable sources (e.g. cloudy day, non-windy conditions) or due to other power transmission problems. The backup electrical power can be provided in a way that can reduce the carbon intensity associated with the providing of the backup power. The backup power can also be provided to help avoid degradation of equipment that can occur from sudden losses of electrical power. In some embodiments, hydrogen powered turbines, hydrogen fuel cells, biofuel generators, and/or hydrogen powered engines can be utilized for providing the backup power.

## Description

The present application claims priority to U.S. Provisional Patent Application No. 63/532,735, filed on August 15, 2023.

The present innovation relates to systems, apparatuses and controllers that are configured to facilitate the providing of backup power (e.g. backup sources of electricity) to maintain operations for a plant or facility configured for making hydrogen and/or ammonia in response to a sufficient loss of power from primary electricity providing sources that are typically expected to provide electrical power to a facility or elements of the facility, and methods of making and using the same. Embodiments can also (or alternatively) be configured to permit an orderly shutdown of hydrogen production operations and/or ammonia production operations. For example, some embodiments can be configured to facilitate an orderly shutdown of equipment so that restart operations can occur more quickly when power from the primary electricity providing sources is again available. In some embodiments, it is contemplated that the backup power that may be provided can be sufficient to facilitate a relatively low level of ammonia and/or hydrogen production for at least a pre-selected period of time prior to an orderly shutdown of equipment.

Hydrogen production can be provided by use of one or more electrolyzers. The electrolyzers can produce hydrogen from water via electrolysis. U.S. Patent Application Publication Nos. 2022/0290309 and 2022/0033983 discloses examples of hydrogen production via one or more electrolyzers. Hydrogen production that is powered by use of renewable power sources can be considered green hydrogen production.

Green ammonia manufacturing can be provided so that ammonia is made by use of electricity from renewable power sources (e.g. solar power or wind power). Examples of ammonia production that can be provided from renewable power sources can be appreciated from European Patent Application Publication No. EP 3 957 772 A1, for example.

We have determined that conventional plants designed to manufacture hydrogen often utilize distributed diesel generators with a fairly long transition time following failure of normal supply of power (e.g., electricity) that is produced from a fuel source having high carbon intensity (e.g. fossil fuel based electricity generation source such as natural gas or coal fired electrical generation systems). These decentralized distributed backup power systems utilizing decentralized diesel powered generator are typically designed with the understanding that a lack of power would be unexpected and rare.

We determined that, due to the intermittent nature of a renewable power sources (e.g. wind and/or solar) a power system will often not remain stable for certain operation scenarios (e.g. cloudy days, low wind weather conditions, electrical faults, etc.). This may be the case even when a battery-based backup system and/or grid and load shedding support are provided. Under such low power generation conditions, orderly and safe shutdown of a facility can be an important feature to help protect sensitive assets (e.g. alkaline electrolyzer cells) and avoid accelerated degradation of such equipment so that the life of such equipment can be preserved.

To help address these identified shortcomings, we have developed processes, apparatuses, and control systems that can be adapted to provide a centralized emergency backup power for hydrogen production and/or ammonia production facilities. Embodiments can utilize one or more electricity generation devices that can be powered by a no-carbon intensity fuel or a low carbon intensity fuel such as green hydrogen (e.g. hydrogen made from renewable power), blue hydrogen (e.g. hydrogen made using carbon capture technology to provide hydrogen with a low carbon footprint and low carbon intensity) or biofuel (e.g. bio diesel or other bio fuel made from non-fossil fuel sources having a biological origin such as animal fats, fish oils, and/or plant oils, etc.). For example, embodiments can be configured so that one or more of: at least one hydrogen fuel cell, at least one hydrogen turbine, at least one hydrogen engine, and/or at least one biofuel generator (e.g. biodiesel generator) are provided and are configured for being actuated for providing emergency backup power in response to a detected low power condition (e.g. loss of power, loss of power so that no power is available or a level of power is available that is below a pre-selected minimum level, etc.) so that equipment used to make hydrogen and/or ammonia is able to receive sufficient power levels to permit an orderly shutdown of the equipment (e.g. avoid an abrupt or immediate shutdown that could pose processing or equipment problems or increase wear on equipment that may degrade equipment life, etc.) in response to low power condition that may be available from the primary power provided sources, which can also be considered primary power providing sources, (e.g. renewable power based sources such as solar power via solar power cells and/or wind power via wind turbines). The orderly shutdown can be in accordance with a predetermined shutdown scheme that is configured to prevent immediate cessation of equipment operations to help preserve the life of the equipment and avoid degradation of the equipment. In some cases, it is contemplated that embodiments may be configured to help avoid having to shutdown the equipment in response to low power condition that may be available from the primary power provided sources (e.g. renewable power based sources such as solar power via solar power cells and/or wind power via wind turbines) for at least a pre-selected power loss operational time period. In other embodiments, the backup power can be provided to facilitate an orderly shutdown of equipment to help avoid equipment degradation that can occur as a result of a sudden cessation of operation.

Some embodiments can be adapted so that hydrogen and/or ammonia that is produced during a backup power condition can maintain a green environmental standard by avoiding use of carbon based power (e.g. a fossil fuel based fuel to power electricity generation). Also, embodiments can be provided to help avoid degradation of equipment that can occur due to sudden cessation of operation from unexpected power outages that can negatively affect the life of the equipment.

For example, embodiments of our process, control system, and apparatus can be configured to help eliminate damage or reduce degradation damage of various production units (e.g. electrolyzers, etc.) that may occur as a result of lost power conditions or low power conditions while also helping to ensure faster restart times. Embodiments can also be configured so that implementation avoids use of a carbon intense fuel or avoid use of a carbon based fuel all together while limited hydrogen production and/or ammonia production is performed via the emergency backup power. For example, some embodiments can be configured as a green solution with a short transition time by use of green hydrogen and/or biofuel fuel sources that power the generation of electricity for the emergency backup power.

Some embodiments can be configured so that restoration of power is providable to different equipment within pre-selected or pre-defined process immunity times (PITs). Such actions can help avoid shutdown or permit an orderly shutdown of certain equipment to occur in accordance with a pre-defined priority schedule that can take into account equipment requirements and operator preferences.

Also, embodiments can avoid poor reliability associated with decentralized generators. For example, electrolyzer emergency loads can be associated with high harmonic content and we have found that providing larger centralized generation of backup power (or electricity) for such loads can help reduce harmonic mitigation requirements (e.g. lower the source impedance as compared to decentralized generation).

Large induction motors previously required soft starting with decentralized generation. In contrast, embodiments of our apparatus, controller, and process can permit loads to be dealt with directly online (e.g. due to an overall lower source impedance), which we found could permit faster response times for power loss conditions.

We also have found that embodiments of our apparatus, process and controller can be adapted to provide improved operational flexibility while also reducing the capital costs associated with implementation. For example, utilization of decentralized generators can be cost prohibitive as compared to embodiments of our apparatus because the overall cost of the decentralized generators can be significantly higher due to the additional cost associated with a larger number of distributed generators as compared to a reduced number of centrally arranged generators that can be utilized in embodiments of our apparatus and use of embodiments of our process. As another example, embodiments can provide reduced maintenance. For instance, embodiments can be configured so that there is a common location for routine maintenance and fuel supply. In contrast, decentralized generators often require extensive maintenance (larger number of generators) over geographically distributed areas (e.g. numerous locations at which the different generators need to be maintained and/or provided with fuel, etc.).

Some embodiments can utilize a control scheme for detection of a power loss or low power condition and responding to such a condition. For instance, embodiments can be configured to detect a total loss of main power and/or other low power condition affecting hydrogen production and/or ammonia production. For example, a low power or non-power condition can be detected at a main voltage switchboard (e.g. via undervoltage detection and/or initiation signal from an upstream system utilized to predict a low power condition that is to occur in the future). In response, a battery-based system can be connected for providing electrical power to avoid the low power condition from significantly affecting operations during the initial starting phase of the low power condition (e.g. within the first few minutes or first 1-2 hours of a low power condition occurring, etc.). One or more emergency backup electrical generation devices can be started up while the battery-based system is actuated and providing power to make up for the low power condition so that the generation devices can be started and have the power generated form operation of those systems brought online in a staggered, sequential manner before the battery system loses its stored power. This can be done to help limit the amount of power being provided by the battery system to help prolong the battery system's effectiveness for subsequent cessation of use of the battery-based system prior to the battery system losing all of its stored power. The battery system can be ramped down in operation until it is at zero power output as the backup electrical generator devices are brought on-line.

For instance, the battery system can be initially brought on-line to ramp up power based on incomer measurements during the initial loss of power and then seamlessly transfer the load onto one or more emergency generator devices once they have been started and are brought online. The initial power supplied from the battery system can allow for a prompt reacceleration of pre-defined critical loads for certain equipment (e.g. electrolyzers, auxiliary equipment, etc.) or be brought online in a way to avoid any cessation of operation due to the low power condition to help minimize equipment degradation and reduce required maintenance and down time, which can increase productivity and reduce operating expenses. Embodiments can permit a power transfer scheme to be employed so that a fast transfer to the emergency backup power can be achieved to allow the hydrogen production and/or ammonia production critical loads to have minimal delay or slow downs as a result of the power loss condition and also avoid equipment degradation and also avoid use of carbon intense fuel sources.

Some embodiments can be configured and implemented so that under normal operational conditions, a power system can have a grid connection for stability support. In cases where a disconnection from the grid occurs, the power system or micro grid can be operated in an islanded mode. We determined that a renewable power system design may not be able to sustain all loads in islanded operation even with grid forming inverters, battery energy storage system (BESS) and Static Synchronous Compensator (STATCOM) support. Loads can be kept operational as far as possible by utilizing off load shedding and/or ramping down of loads when necessary. In cases where sufficient stable renewable power is not available for extended operation, the BESS can be utilized to supply power to identified loads. After further ramp down or shedding of non-emergency loads (if applicable), make before break auto transfers can be initiated to transfer emergency busses from normal incomers to emergency incomers. In some situations, a make before break transfer can also be initiated from the normal supply at a centralized generation substation to a BESS supply (e.g., to allow non-emergency BESS feeders to be isolated and only feed the dedicated feeder to the centralized generation/emergency distribution substation). A seamless transition from the BESS supply to generation can be initiated prior to unacceptable depletion of the BESS. The transition control can be adapted to account for multiple generators. In certain fault conditions, power system stability cannot be obtained and it is not possible to follow this sequence. In these cases a shutdown sequence can be followed.

According to a first aspect of the present invention, there is provided a process for controlling the providing of backup electrical power for hydrogen production and/or ammonia production, comprising: detecting a loss of power condition for a main power system that meets a pre-selected power loss threshold; and in response to detecting the loss of power condition, providing backup electricity via a battery energy storage system (BESS) and/or operation of at least one backup emergency electricity generation device in accordance with a pre-selected priority power scheme, the at least one backup emergency electricity generation device configured to utilize hydrogen or biofuel for generation of the backup electricity.

In one embodiment, the providing of the backup electricity includes adjusting a BESS connection to a main voltage distribution system to a transmission position and the providing backup electricity also includes the operation of at least one backup emergency electricity generation device, the operation of the at least one backup emergency electricity generation device comprising initiation of operation of the at least one backup emergency electricity generation device to start-up the at least one backup emergency electricity generation device for generation of the backup electricity.

In one embodiment the process further comprises: ramping down electricity provided by the BESS after the at least one backup emergency electricity generation device is brought on-line for transmission of the backup electricity to the main voltage distribution system.

In one embodiment, the providing of the backup electricity includes: transmitting the backup electricity from the BESS and/or the at least one backup emergency electricity generation device to electrolyzer houses of a plant, the electrolyzer houses having electrolyzers operated via the backup electricity to produce hydrogen via electrolysis of water.

In one embodiment, the providing of the backup electricity also includes: transmitting the backup electricity from the BESS and/or the at least one backup emergency electricity generation device to ammonia manufacturing equipment of the plant and/or an air separation unit (ASU) of the plant.

In one embodiment, the providing of the backup electricity also includes: transmitting the backup electricity from the BESS and/or the at least one backup emergency electricity generation device to utilities of the plant, support equipment of the plant, and process fluid driving equipment of the plant.

In one embodiment, the providing of the backup electricity also includes: transmitting the backup electricity from the BESS and/or the at least one backup emergency electricity generation to utilities of the plant, support equipment of the plant, and process fluid driving equipment of the plant.

In one embodiment, the detecting of the loss of power condition comprises: detecting a loss of main power via the main voltage distribution system, the main power system and/or an upstream sensor of a renewable power generation system that provides electricity to the main power system as a primary source of electricity.

In one embodiment, the detecting of the loss of main power comprises detecting an undervoltage condition in which voltage from the main power system is at or below a first pre-selected low power threshold.

In one embodiment, the detecting of the loss of main power comprises receiving a low power detection signal from sensor or detector of the renewable power generation system.

In one embodiment, the providing of backup electricity via the BESS and/or the operation of the at least one backup emergency electricity generation device in accordance with a pre-selected priority power scheme comprises: operating the at least one backup emergency electricity generation device to facilitate a shutdown of the hydrogen and/or ammonia production via a pre-defined shutdown scheme.

In one embodiment, the at least one backup emergency electricity generation device comprises a plurality of backup emergency electricity generation devices, and the process comprising: bringing the backup emergency electricity generation devices on-line via the main voltage distribution system in a staggered scheme so that each backup emergency electricity generation device is brought on-line at a different time after the backup electricity has begun to be provided via the BESS.

According to a second aspect of the present invention, there is provided an apparatus for providing of backup electrical power for hydrogen production and/or ammonia production, comprising: a main power system; a battery energy storage system (BESS); at least one backup emergency electricity generation device configured to utilize hydrogen or biofuel for generation of electricity; a main voltage distribution system connected to the main power system via at least one main power system electrical connection; the main voltage distribution system connected to the BESS via at least one BESS electrical connection that is adjustable from a non-transmission position to a transmission position; and the main voltage distribution system connected to the at least one backup emergency electricity generation device via at least one electricity generation device connection that is adjustable from a non-transmission position to a transmission position; and a master control device positioned and configured to detect a loss of power condition for the main power system that meets a pre-selected power loss threshold and, in response to detecting the loss of power condition, initiate providing of backup electricity via the BESS and/or operation of the at least one backup emergency electricity generation device in accordance with a pre-selected priority power scheme.

In one embodiment, the master control device is configured to initiate adjustment of the at least one BESS electrical connection from the non-transmission position to the transmission position in response to detecting the loss of power.

In one embodiment, the master control device is configured to initiate adjustment of the at least one electricity generation device connection from the non-transmission position to the transmission position after the at least one backup electricity generation device is started up for operation.

In one embodiment, the at least one backup electricity generation device comprises at least one hydrogen fuel cell, at least one hydrogen turbine, at least one hydrogen engine, and/or at least one biofuel generator.

In one embodiment, the at least one backup electricity generation device comprises a plurality of biofuel generators.

According to a third aspect of the present invention, there is provided a master control device for controlling how backup electrical power for hydrogen production and/or ammonia production is provided, comprising: a processor connected to a non-transitory computer readable medium, the master control device configured to monitor operation of an apparatus for providing of backup electrical power for hydrogen and/or ammonia production, the master control device configured to: detect a loss of power condition for a main power system that meets a pre-selected power loss threshold and, in response to detecting the loss of power condition, initiate providing of backup electricity via a battery energy storage system (BESS) and/or operation of at least one backup emergency electricity generation device in accordance with a pre-selected priority power scheme, the at least one backup emergency electricity generation device configured to utilize hydrogen or biofuel for generation of electricity; and wherein the main power system is configured to facilitate transmission of electricity generated via a renewable power generation system.

In one embodiment, the at least one backup emergency electricity generation device comprises a plurality of backup emergency electricity generation devices, and the master control device is configured to initiate bringing the backup emergency electricity generation devices on-line via a main voltage distribution system in a staggered scheme so that each backup emergency electricity generation device is brought on-line at a different time after the backup electricity has begun to be provided via the BESS.

In one embodiment, detection of the loss of power condition comprises detecting an undervoltage condition in which voltage from the main power system is at or below a first pre-selected low power threshold or receipt of a low power detection signal from sensor or detector of the renewable power generation system, the renewable power generation system comprising wind turbines and/or solar power cells.

In a first aspect, a process for controlling the providing of backup electrical power for hydrogen and/or ammonia production can include detecting a loss of power condition for a main power system that meets a pre-selected power loss threshold. In response to detecting the loss of power condition, backup electricity can be provided via a battery energy storage system (BESS) and/or operation of at least one backup emergency electricity generation device in accordance with a pre-selected priority power scheme. The at least one backup emergency electricity generation device can be configured to utilize hydrogen or biofuel for generation of the backup electricity.

In some embodiments, the providing of backup electricity can provide backup power for hydrogen production and/or ammonia production to facilitate an orderly shutdown of such production and/or operations of that production for a backup power period of time. In embodiments in which the backup power facilitates continued operation of hydrogen production and/or ammonia production, such operations may be scaled down prior to being shutdown in accordance with a pre-defined power loss schedule to facilitate an orderly shutdown of equipment to account for the lost power.

In a second aspect, the providing of the backup electricity can include adjusting a BESS connection to a main voltage distribution system to a transmission position. The providing of backup electricity can also include the operation of at least one backup emergency electricity generation device. The operation of the at least one backup emergency electricity generation device can include initiation of operation of the at least one backup emergency electricity generation device to start-up the at least one backup emergency electricity generation device for generation of the backup electricity.

In a third aspect, the process can also include ramping down electricity provided by the BESS after at least one backup emergency electricity generation device is brought on-line for transmission of the backup electricity to the main voltage distribution system. In some embodiments, this ramping down can occur as different backup emergency electricity generation device are brought online in a staggered manner for providing backup power.

In a fourth aspect, the providing of the backup electricity can include transmitting the backup electricity from the BESS and/or at least one backup emergency electricity generation device to electrolyzer houses of a plant. The electrolyzer houses can have electrolyzers operated via the backup electricity to produce hydrogen via electrolysis of water.

In a fifth aspect, the providing of the backup electricity can include transmitting the backup electricity from the BESS and/or the at least one backup emergency electricity generation device to ammonia manufacturing equipment of the plant and/or an air separation unit (ASU) of the plant.

In a sixth aspect, the providing of the backup electricity can include transmitting the backup electricity from the BESS and/or the at least one backup emergency electricity generation device to utilities of the plant, support equipment of the plant, and/or process fluid driving equipment of the plant. Examples of types of process fluid driving equipment can include pumps and/or compressors.

In a seventh aspect, the detecting of the loss of power condition can include detecting a loss of main power via the main voltage distribution system, the main power system and/or an upstream sensor of a renewable power generation system that provides electricity to the main power system as a primary source of electricity. The renewable power generation system in some embodiments can include solar power generation systems and/or wind power generation systems.

In an eighth aspect, the detecting of the loss of main power can include detecting an undervoltage condition in which voltage from the main power system is at or below a first pre-selected low power threshold. In some embodiments, this detection may occur upon the threshold being met or upon the threshold being met for a pre-selected power loss time period.

In a ninth aspect, the detecting of the loss of main power can include receiving a low power detection signal from sensor or detector of the renewable power generation system.

In a tenth aspect, the providing of backup electricity via the BESS and/or the operation of the at least one backup emergency electricity generation device in accordance with a pre-selected priority power scheme can include operating at least one backup emergency electricity generation device to facilitate a shutdown of the hydrogen production and/or ammonia production via a pre-defined shutdown scheme. In some embodiments, such a pre-defined shutdown scheme can be defined to facilitate an orderly shutdown that accounts for the lost power to try and minimize degradation of equipment that may occur from a sudden loss of power and sudden operational shutdown.

In an eleventh aspect, the at least one backup emergency electricity generation device can include a plurality of backup emergency electricity generation devices. Examples of backup electricity generation devices can include biofuel generators, hydrogen fuel cells, hydrogen turbines, and/or hydrogen engines.

In some embodiments, the bringing of the backup emergency electricity generation devices on-line via the main voltage distribution system can be performed in a staggered scheme so that each backup emergency electricity generation device is brought on-line at a different time after the backup electricity has begun to be provided via the BESS.

In a twelfth aspect, the process of the first aspect can be combined with one or more features of the second aspect, third aspect, fourth aspect, fifth aspect, sixth aspect, seventh aspect, eighth aspect, ninth aspect, tenth aspect and/or eleventh aspect for an embodiment of the process. It should therefore be appreciated that other additional features can be included in the process for other embodiments. Examples of such additional features can be appreciated from the exemplary embodiments discussed herein, for instance.

In a thirteenth aspect, an apparatus for providing of backup electrical power for hydrogen and/or ammonia production is provided. The apparatus can include a main power system, a battery energy storage system (BESS), at least one backup emergency electricity generation device configured to utilize hydrogen or biofuel for generation of electricity, and a main voltage distribution system connected to the main power system via at least one main power system electrical connection. The main voltage distribution system can be connected to the BESS via at least one BESS electrical connection that is adjustable from a non-transmission position to a transmission position. The main voltage distribution system can be connected to at least one backup emergency electricity generation device via at least one electricity generation device connection that is adjustable from a non-transmission position to a transmission position. A master control device can be positioned and configured to detect a loss of power condition for the main power system that meets a pre-selected power loss threshold and, in response to detecting the loss of power condition, initiate providing of backup electricity via the BESS and/or operation of the at least one backup emergency electricity generation device in accordance with a pre-selected priority power scheme.

Embodiments of the apparatus can be configured to implement an embodiment of the process for controlling the providing of backup electrical power for hydrogen and/or ammonia production. The master control device can be a type of machine and can include a processor connected to non-transitory memory and/or at least one transceiver, for example.

In a fourteenth aspect, the master control device can be configured to initiate adjustment of at least one BESS electrical connection from the non-transmission position to the transmission position in response to detecting the loss of power.

In a fifteenth aspect, the master control device can be configured to initiate adjustment of at least one electricity generation device connection from the non-transmission position to the transmission position after the at least one backup electricity generation device is started up for operation.

In a sixteenth aspect, the at least one backup electricity generation device can include at least one hydrogen fuel cell, at least one hydrogen turbine, at least one hydrogen engine, and/or at least one biofuel generator. In some embodiments, the one or more backup electricity generation devices can include a plurality of backup electricity generation devices. Some embodiments can include a plurality of biofuel generators. Other embodiments can include a combination of two or more of at least one hydrogen fuel cell, at least one hydrogen turbine, at least one hydrogen engine, and/or at least one biofuel generator. Yet other embodiments can include different combinations of multiple different types of such devices.

In a seventeenth aspect, the apparatus of the thirteenth aspect can include one or more features of the fourteenth aspect, fifteenth aspect, and/or sixteenth aspect. It should therefore be appreciated that other additional features can be included in the apparatus for other embodiments. Examples of such additional features can be appreciated from the exemplary embodiments discussed herein, for instance.

In an eighteenth aspect, a master control device for controlling how backup electrical power for hydrogen production and/or ammonia production is provided. The master control device can include a processor connected to a non-transitory computer readable medium. The master control device can be configured to monitor operation of an apparatus for providing of backup electrical power for hydrogen and/or ammonia production, the master control device configured to: detect a loss of power condition for a main power system that meets a pre-selected power loss threshold and, in response to detecting the loss of power condition, initiate providing of backup electricity via a battery energy storage system (BESS) and/or operation of at least one backup emergency electricity generation device in accordance with a pre-selected priority power scheme. The at least one backup emergency electricity generation device can be configured to utilize hydrogen or biofuel for generation of electricity. The main power system can be configured to facilitate transmission of electricity generated via a renewable power generation system.

In a nineteenth aspect, at least one backup emergency electricity generation device can include a plurality of backup emergency electricity generation devices and the master control device can be configured to initiate bringing the backup emergency electricity generation devices on-line via a main voltage distribution system in a staggered scheme so that each backup emergency electricity generation device is brought on-line at a different time after the backup electricity has begun to be provided via the BESS.

In a twentieth aspect, detection of the loss of power condition provided by the master control device can include detecting an undervoltage condition in which voltage from the main power system is at or below a first pre-selected low power threshold or receipt of a low power detection signal from sensor or detector of the renewable power generation system. The renewable power generation system can include wind turbines and/or solar power cells in some embodiments.

In a twenty-first aspect, the master control device of the eighteenth aspect can include one or more features of the nineteenth aspect and/or twentieth aspect. It should therefore be appreciated that other additional features can be included in the master control device for other embodiments. Examples of such additional features can be appreciated from the exemplary embodiments discussed herein, for instance.

Other details, objects, and advantages of our controllers, systems, apparatuses, and processes that are configured to facilitate the providing of backup electrical power for hydrogen production and/or ammonia production and methods of making and using the same will become apparent as the following description of certain exemplary embodiments thereof proceeds.

Exemplary embodiments of our controllers, systems, apparatuses, and processes that are configured to facilitate the providing of backup electrical power for hydrogen production and/or ammonia production and methods of making and using the same are shown in the drawings included herewith. It should be understood that like reference characters used in the drawings may identify like components.

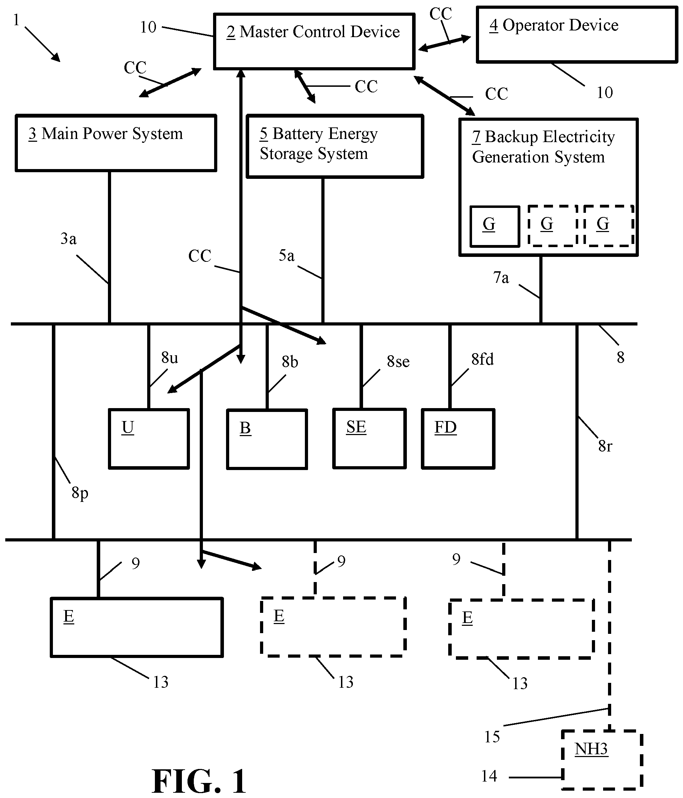

Figure 1 is a schematic block diagram of a first exemplary embodiment of an apparatus configured to facilitate the providing of backup electrical power for hydrogen and/or ammonia production. Some optional elements that can be included in the first exemplary embodiment are illustrated in broken line in in Figure 1.

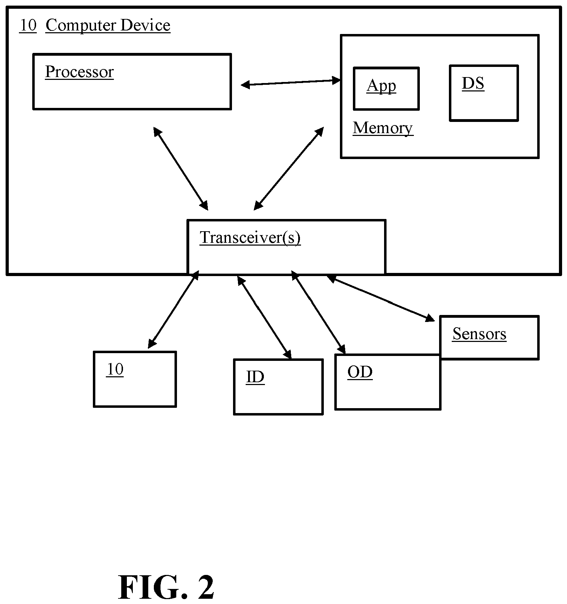

Figure 2 is a schematic block diagram of an exemplary embodiment of a computer device 10 that can be utilized in the first exemplary embodiment of the apparatus configured to facilitate the providing of backup electrical power for hydrogen and/or ammonia production.

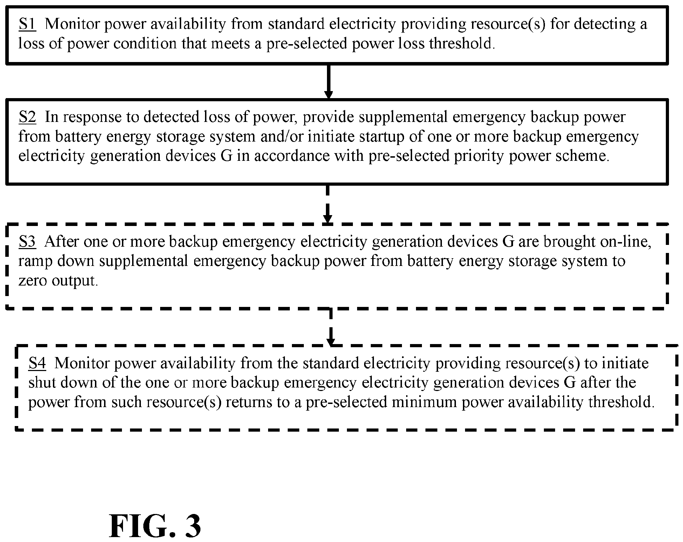

Figure 3 is a flow chart illustrating a first exemplary embodiment of a process for controlling the providing of backup electrical power for hydrogen and/or ammonia production. Optional steps of this first exemplary embodiment of the process are shown in broken line in Figure 3. The first exemplary embodiment of the apparatus configured to facilitate the providing of backup electrical power for hydrogen and/or ammonia production can implement this exemplary embodiment of the process. In implementation of the process by the apparatus 1, the master control device 2 of the apparatus 1 can function to oversee, monitor and/or control utilization of this exemplary embodiment of the process.

Referring to Figures 1-3, an apparatus 1 configured to facilitate the providing of backup electrical power for hydrogen and/or ammonia production can include a number of units positioned and configured to provide backup power to different equipment of a plant for production of hydrogen and/or ammonia. The equipment to be provided with the backup power can include utilities U (e.g. lighting, computerized equipment such as controllers, sensors, operator devices, etc.), building devices B (e.g. security systems, heating, air conditioning, and ventilation (HVAC) devices for buildings of the plant, etc.), support equipment SE such as air separation unit (ASU) devices that can be positioned to provide nitrogen or other process streams for the plant, demineralized and/or purified water devices for providing water to electrolyzers E for generation of hydrogen via electrolysis of the water as well as other devices that can support operation of electrolyzers E for forming hydrogen and/or ammonia manufacturing 14 (NH3) for the formation of ammonia from hydrogen output from the electrolyzers E and nitrogen provided by the ASU. The backup power can be provided to these elements to facilitate the orderly shutdown of the equipment to help minimize or avoid degradation of the equipment that could otherwise occur from immediate or abrupt power outage related shutdowns. The orderly shutdown can be in accordance with a predetermined shutdown scheme that is configured to prevent immediate cessation of equipment operations to help preserve the life of the equipment and avoid degradation of the equipment. In some other embodiments, it is contemplated that the backup electricity can provide backup power to the equipment to help support operation of the equipment until the available power increases to a pre-selected minimum level within a pre-selected backup power time period.

The equipment to be provided with the backup power can also include process fluid driving equipment FD. Examples of such equipment can include pumps and auxiliary compressors for example.

The equipment to receive the backup power can also include electrolyzer houses 13 that can include electrolyzers as well as electrolyzer support equipment which can include, for example, polarization rectifiers, coolers, electrolyzer cell support equipment, and other electrolyzer equipment used to support orderly shutdown , for subsequent start-up (after normal power has been returned) operation of electrolyzers E to form hydrogen from water via electrolysis and/or further treat the formed hydrogen so the hydrogen has a suitable purity level for storage and subsequent use and/or for providing to ammonia manufacturing 14 for use in making ammonia.

The equipment that can receive the backup power can also include equipment used in ammonia manufacturing 14 when ammonia manufacturing is also provided at a plant (e.g. in embodiments in which the plant is not only to produce hydrogen, but is also to produce ammonia or is to primarily produce ammonia using hydrogen from the electrolyzers E, etc.).

The apparatus 1 can include a main power system 3 that is positioned and configured to provide power to the different equipment of the plant. The power that is provided can be electricity that is generated from renewable sources such as solar or wind. For example, the main power system 3 can include solar cells and/or wind turbines that are connected for providing power generated via the solar cells or wind turbines for feeding the power (or electricity) to the main power system 3 for distribution to the different elements of the plant. The main power system 3 can be configured so that the plant is designed to primarily operate using the electricity generated from the renewable power generation devices of the main power system 3 and/or that are connected to the main power system 3. Embodiments configured to operate primarily using renewable power sources can be configured as a green manufacturing facility or a plant designed and configured to produce green hydrogen and/or green ammonia without use of carbon based fuel sources (e.g. fossil fuels like natural gas, diesel, or coal, etc.).

In other less preferred embodiments, the plant for hydrogen and/or ammonia production may be configured for use of fossil fuel based power sources. In such embodiments, the main power system can receive power from a grid or from on-site fossil fuel based electricity generation devices configured to generate electricity from a fossil fuel based fuel (e.g. coal, natural gas, etc.).

The main power system 3 can be connected to a main voltage distribution system 8 for the distribution of power via at least one main power system electrical connection 3a between the main power system 3 and the main voltage distribution system 8. The transmission of electricity, or power, that can be provided by the main voltage distribution system 8 can be for distribution voltages of a pre-selected distribution voltage range. Such a pre-selected distribution voltage range can be, for example, 33 kV or less (e.g. between 33 kV and greater than 0 kV) or other suitable range in some embodiments.

The main voltage distribution system 8 can include electrical connections with the other equipment. Such electrical connections can include at least one utilities electrical connection 8u for connecting the main voltage distribution system 8 to the different utilities U, at least one building electrical connection 8b for connecting the main voltage distribution system 8 with the different building equipment B, at least one support equipment electrical connection 8se for connecting the main voltage distribution system 8 with the different support equipment SE, and at least one flow device connection 8fd for connecting the main voltage distribution system 8 to the different process fluid driving equipment FD. Each of these connections can be electrical connections that facilitate the transmission of power from the main voltage distribution system 8 to the different equipment. The power being transmitted via the main voltage distribution system 8 can be power provided to the main voltage distribution system 8 via renewable power sources (e.g. solar power cells and/or wind turbines), a backup battery energy storage system (BESS) 5 and/or at least one backup electricity generation device G of a centralized backup electricity generation system 7.

The main voltage distribution system 8 can also have electrical connections with the electrolyzer houses 13 for providing power to the different devices of the electrolyzer houses 13, which include electrolyzers E and other electrolyzer operational support equipment (coolers, etc.). For example, the main voltage distribution system 8 can have at least one electrolyzer electrical connection 9 with each of the electrolyzer houses 13 for the transmission of power to the electrolyzer houses 13 and/or their electrolyzers E. The power that is transmittable to the electrolyzer houses 13 and/or the electrolyzers E via the main voltage distribution system 8 can be electricity provided to the main voltage distribution system 8 via renewable power sources (e.g. solar power cells and/or wind turbines), the BESS 5 and/or at least one backup electricity generation device G of a centralized backup electricity generation system 7.

The main voltage distribution system 8 can also have electrical connections with the ammonia manufacturing 14 for embodiments of a plant adapted for ammonia manufacturing (e.g. using nitrogen from an ASU and hydrogen from electrolyzers to form ammonia (NH3)) for providing power to the different devices of the electrolyzer houses 13, which include electrolyzers E and other electrolyzer operational support equipment (coolers, etc.). For example, the main voltage distribution system 8 can have at least one ammonia manufacturing electrical connection 15 with equipment for ammonia manufacturing 14 for the transmission of power to the equipment for ammonia manufacturing for transmission of power to the equipment for ammonia manufacturing 14. The power transmittable via the main voltage distribution system 8 can be electricity provided to the main voltage distribution system 8 via renewable power sources (e.g. solar power cells and/or wind turbines), the BESS 5 and/or at least one backup electricity generation device G of a centralized backup electricity generation system 7.

The apparatus 1 can also include backup electricity generation devices and/or backup electricity providing devices. These backup devices can include a battery energy storage system 5 and a backup electricity generation system 7. The backup battery energy storage system (BESS) can include one or more batteries, an array of batteries, or other type of electricity storage system that can provide electricity via stored energy. The BESS 5 can be connected to the main voltage distribution system 8 via a BESS electrical connection 5a between the BESS and the main voltage distribution system 8.

The BESS electrical connection 5a can be configured so that it can be switched from a transmission position for transmission of electricity from the BESS to the main voltage distribution system 8 to a non-transmission position in which the BESS is unable to transmit electricity to the main voltage distribution system 8. When in the non- transmission position, the BESS may not be sufficiently connected to the main voltage distribution system 8 for transmission of electricity to the main voltage distribution system 8. When in the transmission position, the BESS 5 can be sufficiently connected to the main voltage distribution system 8 for the transmission of electricity from the BESS 5 to the main voltage distribution system 8.

The backup electricity generation system 7 can include one or more electricity generation devices G. Each electricity generation device G can be a hydrogen fuel cell, hydrogen fuel engine, hydrogen gas turbine, or biofuel generator. The hydrogen fuel engine, hydrogen fuel cell, and/or hydrogen gas turbine can be powered by a source of hydrogen made via renewable power and electrolysis of water so that the fuel used for the generation of power via the backup electricity generation system 7 has no carbon intensity and is a green solution for backup electricity generation. The biofuel generator(s) can be configured for running on biofuel that is made from non-fossil fuel sources and also has no carbon intensity or a minimal amount of carbon intensity associated with the processing of the biological origin materials for formation of the biofuel. The one or more electricity generation devices G can be a combination of (i) one or more hydrogen fuel cells, (ii) one or more hydrogen fuel engines, (iii) one or more hydrogen gas turbines, and/or (iv) one or more biofuel generators for the backup electricity generation system 7. Such a combination can include each of items (i) through (iv), two of items (i) through (iv), or three of items (i) through (iv). Alternatively, the one or more electricity generation devices G can all be the same type of generation device (e.g. they can all be fuel cells, all be biofuel generators, all be hydrogen gas turbines, etc.). The overall number of electricity generation devices G that can be utilized can be based on the size and configuration of the devices and the size and power demand of the plant in which the backup electricity generation system 7 is connected.

The backup electricity generation system 7 can be connected to the main voltage distribution system 8 via at least one electricity generation device connection 7a between the backup electricity generation system 7 and the main voltage distribution system 8. In some embodiments, there one or more electricity generation device connections 7a can be provided so that there is a separate electrical connection between each electricity generation device G and the main voltage distribution system 8. In other embodiments, another type of connection arrangement can be utilized for providing electrical connections between the electricity generation devices G and the main voltage distribution system 8 via at least one electricity generation device connection 7a.

Each electricity generation device connection 7a can be configured so that it can be switched from a transmission position for transmission of power from one or more electricity generation devices G to the main voltage distribution system 8 to a non-transmission position in which no power (or electricity) is transmittable to the main voltage distribution system 8. When in the non- transmission position, the electricity generation devices G may not be sufficiently connected to the main voltage distribution system 8 for transmission of power to the main voltage distribution system 8. For example, the non-transmission position can be a standby mode or off position so that the electricity generation device(s) G offline and not connected for transmission of electricity, or power, to the main voltage distribution system 8. When in the transmission position, at least one electricity generation device G can be sufficiently connected to the main voltage distribution system 8 for the transmission of electricity from the electricity generation device G to the main voltage distribution system 8 via at least one electricity generation device connection 7a.

In some embodiments, the main voltage distribution system 8 can include at least one primary electrical connection 8p for transmission of power from the main voltage distribution system 8 to one or more elements of a hydrogen and/or ammonia manufacturing plant. The main voltage distribution system 8 can also include at least one redundant electrical connection 8r for transmission of power from the main voltage distribution system to one or more elements of a hydrogen and/or ammonia manufacturing plant. The number and arrangement of such connections can be based on a pre-selected set of design criteria to help provide sufficient redundancy for power transmissions for electricity from the main power system 3, BESS 5 and/or backup electricity generation system 7.

The apparatus 1 can also include a master control device 2 that can be communicatively connected to the main power system 3, BESS 5, and backup electricity generation system 7. The master control device 2 can also be communicatively connected to elements of the electrolyzers E, electrolyzer houses 13, ammonia manufacturing 14, utilities U, building equipment B, support equipment SE, and process fluid driving equipment FD. For example, the master control device 2 can have communicative connections CC with different sensors, switches, distributed local controllers, or other elements of this equipment. The master control device 2 can also have a communicative connection CC with other equipment (e.g. renewable power generating equipment, devices of a renewable energy providing system, etc.) to receive data from such equipment or about power availability to be transmitted to the main power system 3 for subsequent distribution via the main voltage distribution system 8.

The master control device 2 can be configured as a central controller that can monitor and/or oversee implementation of a backup power control scheme for responding to a detection of a low power condition and initiating the providing of power from the BESS 5 and/or backup electricity generation system 7 in accordance with a pre-defined control scheme. The lower power condition can be, for example, a detected loss of power or a detected decrease in available power that results in the available power being below a pre-selected minimum level of power. It should be appreciated that the master control device 2 is a type of computer device 10. The master control device 2 is a machine that includes hardware elements.

As may best be appreciated from Figure 2, the master control device 2 can be a type of computer device (e.g. controller, master controller, etc.) that includes a processor connected to non-transitory memory and at least one transceiver, for example. In some embodiments, the master control device 2 can be considered an automated process control master controller or a distributed control system master controller, or power management system, for example. The memory (Memory) of the master control device can have at least one application (App) and at least one data store (DS) such as, for example, files, databases, tables, lists, and/or other data stores. The application can be defined by code that the processor (Processor) runs. The code can define at least one emergency power generation control scheme that is to be run by the master control device 2, for example. The master control device 2 can also have one or more transceivers (Transceiver(s)) connected to the processor for communicative connections with other computer devices (e.g. operator device 4, etc.) as well as one or more input devices ID, one or more output devices OD, and/or a plurality of sensors (Sensors). The sensors can include, for example, one or more of: detectors, electricity transmission related sensors, temperature sensors, voltage sensors, current sensors, pressure sensors, flow rate sensors, etc. Examples of input devices ID can include buttons, a keypad, a keyboard, a stylus, a microphone, or a touch screen. Examples of output devices OD can include a display, a printer, and/or a speaker. The transceiver(s) of the master control device 2 can include at least one local area network connection transceiver, at least one wide area network connection transceiver and/or at least one near field communication transceiver. The transceivers can be configured for communications that can be facilitated via wireless communication and/or hard wired communicative connections.

The master control device 2 can also have a communicative connection CC with at least one operator device 4 to receive input from that device for updating the control scheme and/or adjusting the control scheme being overseen and/or implemented by the master control device 2. For example, an operator device 4 can be used by an operator to provide setpoint adjustment, control parameter adjustment, or operator override input to the master control device 2 for adjusting how the control scheme is implemented by the master control device 2. It should be appreciated that the operator device 4 is a type of computer device 10. The operator device 4 is a machine that includes hardware elements. For example, the operator device 4 can be a laptop computer, personal computer, or other type of computer device. An operator can utilize the operator device 4 to provide input to the master control device as well as receive output generated via the operator device that is based on data that the operator device receives from the master control device. The operator device 4 can be a component of an automated process control system for the hydrogen and/or ammonia manufacturing facility as well.

As may best be appreciated from Figure 2, the operator device 4 can include a processor connected to non-transitory memory that has a number of applications (App) stored thereon and a number of data stores (DS) stored thereon. The operator device can also include one or more transceivers for communicative connections with input devices (ID), output devices (OD), sensors, and/or other computer devices (e.g. master control device 2, etc.). The transceivers can include at least one local area network connection transceiver, at least one wide area network connection transceiver and/or at least one near field communication transceiver. The transceivers can be configured for communications that can be facilitated via wireless communication and/or hard wired communicative connections.

It should be appreciated that at least some communicative connections CC can utilize other elements for the connection. For example, some wireless communicative connections CC can involve use of an access point, router, or intermediate nodes.

Examples of input devices ID that can be connected to the operator device 4 can include buttons, a keypad, a keyboard, a stylus, a microphone, or a touch screen. Examples of output devices OD that can be connected to the operator device 4 can include a display, a printer, and/or a speaker. For example, the operator device 4 can be configured to illustrate a graphical user interface (GUI) on a display to facilitate a user providing input to the operator device 4 for communication of that input to the master control device 2 via the operator's interaction with the GUI via a touch screen display, pointer device and/or keyboard input device.

The master control device 2 can be configured to communicate with different elements and local control elements of the equipment of the plant and master voltage transmission system 8 to detect a low power condition and actuate providing of emergency backup power from the BESS and/or backup electricity generation system 7 in accordance with a pre-defined control scheme. The pre-define control scheme can include at least one pre-selected low power threshold and at least one emergency backup prioritization scheme. In situations where there are multiple emergency backup prioritization schemes and multiple different low power thresholds, the master control device 2 can be configured so that each emergency backup prioritization scheme is assigned to a respective low power threshold. Each of the low power thresholds can be defined for different situations (e.g. type of low power condition, reason that the low power condition exists, etc.). For example, there can be a first low power threshold for a first pre-defined low level of electricity in which less than a pre-selected minimum amount of electricity may be available from the main power system 3 and where there is also at least some electricity providable via the main power system 3 and a second low power threshold for a second pre-defined low level of electricity in which no electricity may be provided by the main power system 3. Each low power threshold condition can be assigned a different type of pre-defined emergency backup prioritization scheme or the same pre-defined emergency backup prioritization scheme can be applied in response to each detected low power condition.

Embodiments of the apparatus 1 can be configured to utilize a ring topology that can deploy a semi-ring topology that allows continuous supply to critical equipment. Figure 1 illustrates an example of such an arrangement. The apparatus 1 can also be configured to utilize a power distribution scheme (or electricity distribution scheme) that can incorporate a transfer scheme at each emergency load switchboard to transfer power from a normal supply switchboard for power provided via the main power system 3 to at least one emergency switchboard for use of power from the BESS and/or backup electricity generation system 7. The transfer from the main power system 3 power to the one or more backup power systems can be configured to occur automatically following loss of power from the main power system 3.

The transfer from power provided via the main power system 3 to power provided via the BESS and/or the backup electricity generation system 7 can be defined via a pre-defined emergency backup prioritization scheme. An example of such a scheme can include a detection of a loss of main power detected via the main voltage distribution system 8, main power system 3 and/or an upstream sensor of a renewable power generation system that can provide power via the main power system 3. An example of such a detection can be a detection of an undervoltage condition in which voltage from the main power system is at or below a first pre-selected low power threshold. Another example of such a detection of a low power condition can be receipt of a low power detection signal from sensor or detector of a renewable power generation system that can provide power to the main power system 3 for distribution to the apparatus 1.

In response to the detected low power condition, the BESS electrical connection 5a can be adjusted to the transmission position for transmission of power from the BESS to the main voltage distribution system 8. This adjustment can be provided so that the BESS can supply power to power static loads (e.g. utilities such as lighting, computer equipment, controllers, sensors, etc.). The master control device 2 can also communicate with the backup electricity generation system so that the backup electricity generation devices G are actuated and start-up so that they can start running and be in a position to generate electricity. Such devices can have a start-up time of 30 seconds to 2 minutes in some embodiments. Other embodiments of the backup electricity generation devices G can have other start-up times (e.g. up to five minutes, from 10 seconds to 2 hours, from more than 0 seconds to 10 minutes, etc.).

Each electricity generation device G can be started at the same time and subsequently brought on-line at different times in a staggered on-line connection scheme. Alternatively, each electricity generation device G can be started at different times for being brough on-line in a staggered, sequential order. Such staggered on-line connections or staggered start-ups can be configured to help minimize load instability that can occur when a new electricity generation device is brought on to the main voltage distribution system 8 so that the system is not overloaded from the connection with the different electricity generation devices G. Each electricity generation device connection 7a for each electricity generation device G can be adjusted to a transmission state after each device has started up and is available for being brought on-line. The adjustments to the transmission states for different electricity generation device connections 7a can occur in a staggered manner to avoid all the devices being brought on-line at the same time. Alternatively, the single electricity generation device connection 7a can be adjusted to its transmission position and each device can be brought on-line in a staggered way to manage the providing of power via that connection to help minimize flux associated with the increased transmission of power from the different electricity generation devices G that can be brought on-line to account for the low power condition.

As the different electricity generation devices G are brought on-line (e.g. sequentially brought on-line), the BESS 5 can be ramped down so it provides less power as the different electricity generation devices G are brought online. After sufficient power is provided by the electricity generation devices G, the BESS 5 can be deactivated and/or the BESS connection 5a can be adjusted to the non-transmission position so that the BESS 5 no longer provides power and only the backup electricity generation devices G provide power to the main voltage distribution system 8 for the remainder of the low power condition. The master control device 2 can continue to monitor power availability and use while the low power condition exists.

The BESS 5 can be configured and controlled in response to the low power condition so that it can ramp up power from incomer measurements during the initial loss of power and then seamlessly transfer the load onto the backup electricity generation system 7 once the electricity generation devices G of that system have started and are connected via the transmission position of the at least one electricity generation device connection 7a for transmission of power to the main voltage distribution system 8. The initial power supplied from the BESS 5 can allow the master control device 2 to initiate the reacceleration of critical loads to minimize damage to sensitive electrolyzer equipment of the electrolyzer houses 13 (e.g. electrolyzers E, etc.) to reduce equipment degradation and reduce required maintenance and down time. This can help reduce operational expenses and restart times, which can also help increase productivity.

The master control device 2 can be configured to initiate the BESS 5 and utilize a transfer scheme between the BESS 5 and the backup electricity generation system 7 so that a faster transfer of power can be provided to pre-defined critical equipment so that the equipment has reduced downtime and/or avoids being shut down as a result of the loss of power from the main power system 3. The backup electricity generation system 7 can be configured to provide sufficient power from green hydrogen fuel and/or biofuel so that sustained low power condition periods can be accounted for to provide sufficient power for orderly shutdown of ammonia production operations and/or hydrogen production operations.

In some embodiments, the orderly shutdown can be provided so that hydrogen production and/or ammonia production may be operational at a reduced level for a prolonged period of time so a shutdown of the plant due to low power conditions can be avoided and hydrogen and/or ammonia can continue to be produced while the plant operates utilizing the backup electrical power from the backup electricity generation system 7 and/or BESS 5. For example, the electricity generation devices G of the backup electricity generation system 7 can be arranged to provide substantial levels of electricity for tens of hours (e.g. more than 10 hours, 20 or more hours, etc.), days, or weeks via green hydrogen fuel and/or biofuel to support critical loads prior to restart of operations of the electrolyzers E as well as other equipment (e.g. ASU equipment or other support equipment such as pumps and compressors, ammonia manufacturing equipment, etc.).

The fuel type for the electricity generation devices G of the backup electricity generation system 7 can be hydrogen fuel for use in hydrogen fuel cells, hydrogen powered engines or hydrogen powered gas turbines. The fuel type for the electricity generation devices G of the backup electricity generation system 7 can be a biodiesel or other type of biofuel for electricity generation devices G configured as a biofuel generator. These types of electricity generation devices G can be configured so that they can achieve 100% hydrogen combustion without blending with natural gas so that no carbon may be utilized in conjunction with operation of the backup electricity generation devices G. For the biofuel generators, the biofuel may permit such a carbon reduction in operation. However, some biofuel generators may not be quite as non-carbon and may utilize a small amount of carbon based fuel, but can still provide a 90% reduction in fossil fuel based usage as compared to use of a conventional diesel generator using only fossil fuel based diesel fuel.

In some embodiments, hydrogen fuel cells can be utilized as some of the electricity generation devices G or all of the electricity generation devices. For example, such fuel cells may be utilized in smaller scale embodiments in which there are less than 50 electrolyzers being operated to produce hydrogen for a plant configured to manufacture hydrogen via electrolysis of water that is powered by one or more renewable power sources (e.g. solar and/or wind power).

Figure 3 illustrates an exemplary process that can be monitored, overseen and/or controlled by the master control device 2. The process can include a first step S1 in which power availability from primary power providing resources can be monitored for detecting a loss of power condition that meets a pre-selected power loss threshold. The primary power providing resources can include solar power generation via solar power cells and/or power generation from wind turbines so that the primary power supply is entirely from renewable power in some embodiments. Such a supply of power can be provided via a main power system 3, for example.

In a second step S2, supplemental emergency backup power (e.g. electricity) can be provided from the BESS 5 in response to the detected loss of power. Also (or alternatively), initiation of starting up one or more backup emergency electricity generation devices G can be provided for providing backup power or electricity to replace the loss of power that occurred from the loss of power from the primary power providing resources.

In some situations, a detection of power loss may indicate that a low level of power availability may occur from one or more renewable power sources. One or more of the backup emergency electricity generation devices G may be started in response to such a detection to provide supplemental backup power to supplement the low level of renewable electricity that may be provided consistent with such a detection. Such a detection of the future low power availability may be made such that no involvement of the BESS is needed to provide the supplemental backup power to account for such a low power condition.

In other situations, the detected loss of power may be substantial and may be more sudden to occur or may be a surprise event (e.g. unexpected weather situation and/or equipment failure). In such a situation, the BESS may be utilized to provide a fast response to the loss of power and the one or more backup emergency electricity generation devices G can be started up to provide backup electricity as well so that prolonged backup power can be provided.

Embodiments of the process can be adapted so that the second step S2 can be implemented in different ways to account for different pre-defined low power conditions. It should therefore be appreciated that there can be other implementations for the second step S2 as well that may be performed in accordance with a pre-defined control scheme that is defined for that particular type of detected power loss condition.

In a third step S3 (which is shown in broken line as it may be optional in some embodiments or in some situations), after one or more of the backup electricity generation devices G are brought on-line, the BESS can be ramped down so supplemental power from the BESS is reduced as power is available from the electricity generation devices G that are brought on-line in staggered manner. The BESS can be ramped down sufficient so that it no longer provides power after sufficient electricity is available via the on-line backup electricity generation devices G.

In a fourth step S4 (which is shown in broken line as it may be optional in some embodiments or in some situations), the power available from the primary power providing resources can be monitored to initiate shut down of the backup electricity generation devices G after the power available from the primary power providing resources returns to a pre-selected minimum power availability threshold. Such power availability can be monitored at the main power system 3, for example. After sufficient power is available via the primary power providing resources for the main power system 3, the backup electricity generation devices G can be shut down and brought off-line so the plant resumes operation utilizing the primary power sources (e.g. solar power cells and/or wind turbines, etc.). The shutting down of the electricity generation devices G can occur so that the power via the primary power providing resources may be brought on-line.

Embodiments of our apparatus 1 can be configured to utilize a master control device 2 so that a backup electrical power process can be utilized to provide improved performance that has greater flexibility and also avoids reliance on fossil fuels to reduce the carbon footprint of the backup power system. Embodiments can permit restoration of electrical power to critical and essential equipment within process immunity times (PITs) for orderly shutdown. Embodiments can also avoid poor reliability associated with decentralized diesel generator scheme.

Moreover, electrolyzer emergency loads that can be associated with high harmonic content can be addressed via larger centralized generation that can be provided via the backup electricity generation system 7 so that a lower source impedance is provided as compared to decentralized generation via conventional diesel powered decentralized generators. For instance, large induction motors previously required soft starting with decentralized generation. These loads can now be started directly online with embodiments of the backup electricity generation system 7 due to an overall lower source impedance that it can provide. Reduced maintenance can also be achieved with a common location for routine maintenance and fuel supply compared to decentralized generators that can require extensive maintenance (e.g. larger number of generators positioned in a decentralized manner over a number of different geographically spaced apart areas of a plant).

Further, we have found that the overall capital cost of embodiments of our apparatus and implementation of embodiments of our process can be less than a decentralized diesel generator arrangement for some situations. For example, decentralized arrangements require the purchase of a substantial number of generators for various locations for distributed array of generators to address localized power loss situations. This type of approach can incur substantial capital costs due to the high number of generators that may be needed to be purchased. In contrast, embodiments utilizing our centralized backup electricity generation approach can incur less capital costs as less generators may be needed even though such generator type devices in embodiments of our apparatus 1 may be of a higher cost as they can be designed specifically for use of a non-fossil fuel based fuel source (e.g. biofuel or green hydrogen as discussed herein, etc.).

It should be appreciated that modifications to the embodiments explicitly shown and discussed herein can be made to meet a particular set of design objectives or a particular set of design criteria. For instance, the arrangement of electrical connections, sensors, controller, communication connection elements (e.g. wiring, intermediate network nodes, network arrangement, etc.), and other elements can be arranged, sized, and designed to meet a particular plant layout design that accounts for available area of the plant, a particular array of sensors, controller hardware, and other design considerations. It should be appreciated that embodiments of the apparatus can be configured to include various process control elements positioned and configured to monitor and control operations for hydrogen production and/or ammonia production (e.g. temperature sensors, pressure sensors, flow sensors, target element concentration sensors, an automated process control system having at least one work station that includes a processor, non-transitory memory and at least one transceiver for communications with the sensor elements, valves, and controllers for providing a user interface for an automated process control system that may be run at the work station and/or another computer device, etc.).

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of controllers, apparatuses, systems, and methods of making and using the same have been shown and described above, it is to be distinctly understood that the invention is not limited thereto but may be otherwise variously embodied and practiced within the scope of the following claims.

## Claims

1. A process for controlling the providing of backup electrical power for hydrogen production and/or ammonia production, comprising:
detecting a loss of power condition for a main power system that meets a pre-selected power loss threshold; and
in response to detecting the loss of power condition, providing backup electricity via a battery energy storage system (BESS) and/or operation of at least one backup emergency electricity generation device in accordance with a pre-selected priority power scheme, the at least one backup emergency electricity generation device configured to utilize hydrogen or biofuel for generation of the backup electricity.

2. The process of claim 1, wherein the providing of the backup electricity includes adjusting a BESS connection to a main voltage distribution system to a transmission position and the providing backup electricity also includes the operation of at least one backup emergency electricity generation device, the operation of the at least one backup emergency electricity generation device comprising initiation of operation of the at least one backup emergency electricity generation device to start-up the at least one backup emergency electricity generation device for generation of the backup electricity.

3. The process of claim 2, comprising:
ramping down electricity provided by the BESS after the at least one backup emergency electricity generation device is brought on-line for transmission of the backup electricity to the main voltage distribution system.

4. The process of claim 1, 2 or 3, wherein the providing of the backup electricity includes:
transmitting the backup electricity from the BESS and/or the at least one backup emergency electricity generation device to electrolyzer houses of a plant, the electrolyzer houses having electrolyzers operated via the backup electricity to produce hydrogen via electrolysis of water.

5. The process of claim 4, wherein the providing of the backup electricity also includes:
transmitting the backup electricity from the BESS and/or the at least one backup emergency electricity generation device to:
ammonia manufacturing equipment of the plant; and/or
an air separation unit (ASU) of the plant; and/or
utilities of the plant, support equipment of the plant, and process fluid driving equipment of the plant.

6. The process of claim 4, wherein the detecting of the loss of power condition comprises:
detecting a loss of main power via the main voltage distribution system, the main power system and/or an upstream sensor of a renewable power generation system that provides electricity to the main power system as a primary source of electricity.

7. The process of claim 6, wherein the detecting of the loss of main power comprises detecting an undervoltage condition in which voltage from the main power system is at or below a first pre-selected low power threshold; and/or
wherein the detecting of the loss of main power comprises receiving a low power detection signal from sensor or detector of the renewable power generation system.

8. The process of any one of the preceding claims, wherein the providing of backup electricity via the BESS and/or the operation of the at least one backup emergency electricity generation device in accordance with a pre-selected priority power scheme comprises:
operating the at least one backup emergency electricity generation device to facilitate a shutdown of the hydrogen and/or ammonia production via a pre-defined shutdown scheme; and/or
wherein the at least one backup emergency electricity generation device comprises a plurality of backup emergency electricity generation devices, and the process comprising:
bringing the backup emergency electricity generation devices on-line via the main voltage distribution system in a staggered scheme so that each backup emergency electricity generation device is brought on-line at a different time after the backup electricity has begun to be provided via the BESS.

9. An apparatus for providing of backup electrical power for hydrogen production and/or ammonia production, comprising:
a main power system;
a battery energy storage system (BESS);
at least one backup emergency electricity generation device configured to utilize hydrogen or biofuel for generation of electricity;
a main voltage distribution system connected to the main power system via at least one main power system electrical connection;
the main voltage distribution system connected to the BESS via at least one BESS electrical connection that is adjustable from a non-transmission position to a transmission position; and
the main voltage distribution system connected to the at least one backup emergency electricity generation device via at least one electricity generation device connection that is adjustable from a non-transmission position to a transmission position; and
a master control device positioned and configured to detect a loss of power condition for the main power system that meets a pre-selected power loss threshold and, in response to detecting the loss of power condition, initiate providing of backup electricity via the BESS and/or operation of the at least one backup emergency electricity generation device in accordance with a pre-selected priority power scheme.

10. The apparatus of claim 9, wherein the master control device is configured to initiate adjustment of the at least one BESS electrical connection from the non-transmission position to the transmission position in response to detecting the loss of power.

11. The apparatus of claim 10, wherein the master control device is configured to initiate adjustment of the at least one electricity generation device connection from the non-transmission position to the transmission position after the at least one backup electricity generation device is started up for operation.

12. The apparatus of any one of claims 9, 10 or 11, wherein the at least one backup electricity generation device comprises at least one hydrogen fuel cell, at least one hydrogen turbine, at least one hydrogen engine, and/or at least one biofuel generator.

13. A master control device for controlling how backup electrical power for hydrogen production and/or ammonia production is provided, comprising:
a processor connected to a non-transitory computer readable medium, the master control device configured to monitor operation of an apparatus for providing of backup electrical power for hydrogen and/or ammonia production, the master control device configured to:
detect a loss of power condition for a main power system that meets a pre-selected power loss threshold and, in response to detecting the loss of power condition, initiate providing of backup electricity via a battery energy storage system (BESS) and/or operation of at least one backup emergency electricity generation device in accordance with a pre-selected priority power scheme, the at least one backup emergency electricity generation device configured to utilize hydrogen or biofuel for generation of electricity; and
wherein the main power system is configured to facilitate transmission of electricity generated via a renewable power generation system.

14. The master control device of claim 13, wherein the at least one backup emergency electricity generation device comprises a plurality of backup emergency electricity generation devices, and the master control device is configured to initiate bringing the backup emergency electricity generation devices on-line via a main voltage distribution system in a staggered scheme so that each backup emergency electricity generation device is brought on-line at a different time after the backup electricity has begun to be provided via the BESS.

15. The master control device of claim 14, wherein detection of the loss of power condition comprises detecting an undervoltage condition in which voltage from the main power system is at or below a first pre-selected low power threshold or receipt of a low power detection signal from sensor or detector of the renewable power generation system, the renewable power generation system comprising wind turbines and/or solar power cells.
